# EUROPÄISCHE PATENTSCHRIFT

(11) **EP 3 417 192 B1**
(45) Veröffentlichungstag und Bekanntmachung des Hinweises auf die Patenterteilung: **20.01.2021**
(21) Anmeldenummer: 17706409.4
(22) Anmeldetag: 17.02.2017
(51) Int. Cl.: F16J 15/16, F16J 15/3228, F16J 15/3264

(54) **WELLENDICHTUNG**
SHAFT SEAL
JOINT D'ARBRE

(30) Priorität: 18.02.2016 DE 102016002038
(43) Veröffentlichungstag der Anmeldung: 26.12.2018
(73) Patentinhaber: KACO GmbH + Co. KG, 74912 Kirchardt (DE)
(72) Erfinder: GUST, Herbert, 71691 Freiberg (DE)
(74) Vertreter: Kohl, Karl-Heinz
(86) Internationale Anmeldenummer: PCT/EP2017/000233
(87) Internationale Veröffentlichungsnummer: WO 2017/140434

(56) Entgegenhaltungen:
- DE-A1- 4 128 179
- DE-A1-102004 035 658
- US-A- 4 311 346
- US-A- 5 201 533
- US-A- 5 207 436
- US-A1- 2015 001 810

## Beschreibung

Die Erfindung betrifft eine Wellendichtung nach dem Oberbegriff des Anspruches 1.

Zur Abdichtung von drehenden Wellen sind Wellendichtungen in Form von Radialwellendichtungen bekannt, siehe z.B. US 2015/0001810 A1. Sie haben als Dichtelemente Dichtscheiben, die mit einer Dichtlippe auf der Welle dichtend aufliegen. Um eine zuverlässige dynamische Dichtheit zu gewährleisten, muss die Dichtlippe mit hoher Radialkraft an der Welle anliegen. Dies führt jedoch zu hohen Verlustleistungen infolge hoher Reibungsverluste. Als Wellen werden in den meisten Fällen gehärtete Stahlwellen eingesetzt. Wenn die Dichtlippe aus PTFE besteht, dann sind meist Glasfaser-Compounds notwendig, um den Verschleiß der Dichtlippe gering zu halten. Die im Compound enthaltenen Glasfasern erzeugen auf der Welle hohe Reibungsverluste.

Der Erfindung liegt die Aufgabe zugrunde, die gattungsgemäße Wellendichtung so auszubilden, dass die Reibverluste bei Einsatz der Wellendichtung gering sind.

Diese Aufgabe wird bei der gattungsgemäßen Wellendichtung erfindungsgemäß mit den kennzeichnenden Merkmalen des Anspruches 1 gelöst.

Die erfindungsgemäße Wellendichtung hat zwei Dichteinheiten, von denen die eine Dichteinheit drehfest angeordnet und die andere Dichteinheit drehfest mit der abzudichtenden Welle verbunden ist. Beide Dichteinheiten haben jeweils ein Dichtelement. Wenigstens einer der Dichtteile der beiden Dichteinheiten liegt unter elastischer Vorspannung am Dichtteil der anderen Dichteinheit dichtend an. Da der Dichtteil somit nicht mehr an der Welle dichtend anliegt, tritt nur eine sehr geringe Reibung am Dichtteil auf. Die Reibleistungsverluste sind dadurch sehr gering. Dies ist insbesondere dann der Fall, wenn zumindest die Dichtteile aus Werkstoffen mit sehr geringen Reibungskoeffizienten bestehen.

Vorteilhaft ist das Dichtelement zumindest der einen Dichteinheit eine Dichtscheibe, die mit einem Befestigungsteil am Träger befestigt ist. Die Dichtscheibe kann beispielsweise mit ihrem Befestigungsteil am Träger angeklebt sein. Ein solches Dichtelement lässt sich einfach und kostengünstig herstellen und am Träger anbringen.

Das Dichtelement kann aber auch am Träger anvulkanisiert sein.

Bei einer vorteilhaften Ausführungsform besteht das Dichtelement aus reinem PTFE oder PTFE-Compounds. Mit solchen Werkstoffen hergestellte Dichtelemente haben Dichtlippen, die eine sehr geringe Dicke aufweisen können. Dadurch kann die Radialkraft und somit die Verlustleistung signifikant verringert werden.

Die PTFE-Compounds sind vorteilhaft glasfaserfrei, was zur weiteren Verringerung der Reibungsverluste führt.

Die PTFE-Compounds können vorteilhaft mit pulverförmigen Füllstoffen versehen sein.

Bei einer anderen vorteilhaften Ausbildung besteht das Dichtelement aus einem Elastomerwerkstoff oder einem anderen geeigneten Kunststoff. In diesem Falle ist es vorteilhaft, zumindest die Dichtlippe mit einer reibungsreduzierenden Beschichtung, beispielsweise einer DLC-Schicht, zu versehen, wodurch die Reibung drastisch verringert wird.

Erfindungsgemäß sind die Dichtteile beider Dichteinheiten als Dichtlippen ausgebildet. Ihre freien Enden liegen unter elastischer Vorspannung flächig aneinander. In diesem Falle erfolgt die Abdichtung durch die beiden aneinander liegenden Dichtlippen. Bei dieser Ausführung können je nach Bauart größere Toleranzen sowohl in radialer als auch in axialer Richtung ausgeglichen werden, ohne dass die dynamische Abdichtung beeinträchtigt wird. Wenn die beiden Dichtlippen aus dem gleichen Werkstoff oder einem ähnlichen Werkstoff mit geringem Reibungskoeffizienten oder mit entsprechend reibungsreduzierender Beschichtung bestehen, dann ergibt sich eine äußerst geringe Verlustleistung.

Je nach Ausbildung und/oder Anordnung der Träger der Dichteinheiten können die aneinander liegenden Dichtlippen so vorgesehen sein, dass sie einander auf einer Kegelfläche oder einer Zylinderfläche berühren. Liegt die Dichtfläche, die durch die aneinander liegenden Flächen der beiden Dichtlippen gebildet wird, auf einem Kegelmantel, dann hat dies den zusätzlichen Vorteil, dass das abzudichtende Medium bei rotierender Welle durch Fliehkrafteffekte aufgrund der Schräglage der Dichtfläche, im Axialschnitt gesehen, durch den mit dem Medium in Berührung kommenden Dichtteil der auf der Welle sitzenden Dichteinheit in Richtung auf die Mediumsseite zurückgefördert werden kann.

Erfindungsgemäß sind die Dichtlippen beider Dichteinheiten so ausgebildet und angeordnet, dass sie unter gegeneinander gerichteter elastischer Vorspannung aneinander liegen. Beide Dichtlippen werden dadurch fest gegeneinander gedrückt und auf diese Weise die dynamische Abdichtung zwischen beiden Dichtlippen erhöht.

Vorteilhaft ist es, wenn die Dichtlippen im Bereich zwischen den Trägern der beiden Dichteinheiten dichtend aneinander liegen. Hierbei ist die Anordnung vorteilhaft so getroffen, dass die Träger ausreichenden Abstand von den Dichtlippen haben, so dass sie die Dichtwirkung nicht beeinträchtigen.

Die Träger der Dichteinheiten haben vorteilhaft L-förmigen Querschnitt und sind mit einem zylindrischen Mantel versehen. An zumindest ein axiales Ende des zylindrischen Mantels schließt ein Flansch an. Solche Träger lassen sich einfach in einem Einbauraum eines Aggregates sowie auf der abzudichtenden Welle montieren.

Bei einer vorteilhaften Ausbildung schließt der Flansch rechtwinklig an den zylindrischen Mantel der Träger an.

Je nach Einbaulage und/oder Einbaubedingungen kann der Flansch auch spitzwinklig an den zylindrischen Mantel der Träger anschließen. Es ist somit durch entsprechende Lage des Flansches bezüglich des zylindrischen Mantels des Trägers möglich, die Wellendichtung an unterschiedliche Einbaubedingungen anzupassen.

Das Dichtelement kann mit seinem Befestigungsteil am Flansch oder am zylindrischen Mantel des Trägers befestigt sein.

Das Dichtelement der einen Dichteinheit kann bei einer vorteilhaften Ausführungsform eine Hülse sein, die an der Innen- oder der Außenseite des zylindrischen Mantels des Trägers angeordnet ist. Die Hülse kann beispielsweise an den zylindrischen Mantel angeklebt sein. Die Hülse kann vorteilhaft kostengünstig von einem extrudierten PTFE-Rohr abgestochen werden. Die Dichtlippe der anderen Dichteinheit liegt in diesem Falle an diesem hülsenförmigen Dichtelement an.

Bei einer anderen vorteilhaften Ausbildung ist das Dichtelement eine Dichtscheibe, die am Flansch des Trägers angeordnet ist. Die Dichtlippe der anderen Dichteinheit liegt dann an dieser Dichtscheibe flächig an.

Der Dichtteil wenigstens der einen Dichteinheit kann auch als Teil eines vorzugsweise elastomeren Überzuges ausgebildet sein, mit dem zumindest ein Teil des Trägers bedeckt wird. Der Überzug kann beispielsweise als statische Dichtung eingesetzt werden, um den Träger gegenüber dem Aggregat bzw. der Welle statisch abzudichten.

Die beiden Dichteinheiten können so eingebaut werden, dass die Dichtteile vom Träger aus entgegengesetzt zueinander oder in gleicher Richtung verlaufen. Auf diese Weise ist eine einfache Abstimmung der Wellendichtung auf den Einsatzfall möglich.

Eine besonders vorteilhafte Ausbildung ergibt sich, wenn der Dichtteil der drehfest auf der Welle sitzenden Dichteinheit den Dichtteil der drehfesten Dichteinheit an der radial äußeren Seite übergreift. Dies hat den Vorteil, dass bei drehender Welle der übergreifende Dichtteil infolge der auf ihn wirkenden Fliehkräfte geringfügig vom Dichtteil der drehfesten Dichteinheit abhebt. Dies ist insbesondere bei sehr hohen Drehzahlen der Welle möglich. In diesem Falle findet keine Berührung zwischen den dynamisch abdichtenden Dichtteilen statt, so dass äußerst geringe Reibleistungsverluste auftreten. Auch bei geringen Drehzahlen, bei denen die Dichtteile zumindest partiell noch aneinander liegen, treten nur sehr geringe Reibleistungsverluste auf.

Eine vorteilhafte Ausbildung ergibt sich, wenn das Dichtelement zumindest der einen Dichteinheit im Axialhalbschnitt bogenförmig ausgebildet ist.

Zur Rückförderung von Leckagemedium kann eine oder auch beide der flächig aneinander liegenden Dichtteile (Dichtlippen) mit förderwirksamen Strukturen versehen sein.

Entsprechend gestaltete Strukturen in einer oder beiden Dichtlippen können im dynamischen Fall bei Drehung der Welle ein Gaspolster bilden, auf dem die beiden Dichtlippen mit noch geringerer Reibung laufen bzw. gleiten oder sogar voneinander abheben.

Wenn in beiden Dichtteilen förderwirksame Strukturen vorgesehen sind, ist es vorteilhaft, wenn diese Strukturen gegenläufig zueinander angeordnet sind. Dadurch wird eine Luftströmung in einer Richtung zwischen den Dichtteilen verhindert.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

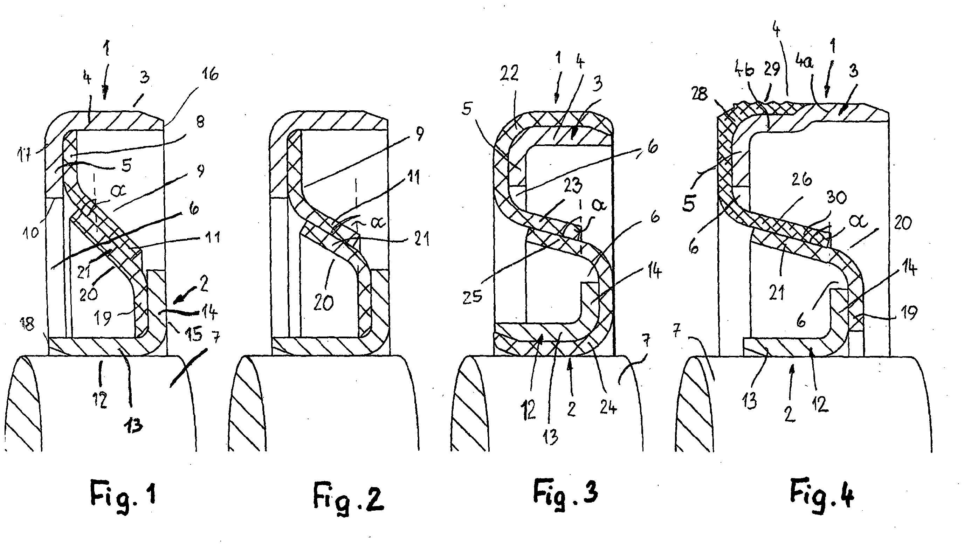

Die Erfindung wird nachstehend anhand einiger in den Zeichnungen dargestellter Ausführungsformen näher erläutert. Es zeigen
- Fig. 1 bis Fig. 22: jeweils im Axialschnitt die eine Hälfte von erfindungsgemäßen Wellendichtungen.

Die nachfolgend beschriebenen Wellendichtungen zeichnen sich dadurch aus, dass sie im dynamischen Zustand berührend abdichten und an der Dichtlippe eine sehr geringe Reibung aufweisen. Entsprechend ausgelegte Wellendichtungen können bei sehr hohen Drehzahlen berührungsfrei sein, wobei sie auch bei sehr geringen Drehzahlen vor dem Abheben nur sehr geringe Reibleistungsverluste haben. Die Wellendichtungen werden durch zwei Dichteinheiten gebildet, die so zueinander angeordnet sind, dass ihre Dichtteile einander berühren und mit Radialkraft und/oder Axialkraft. Die Dichteinheit aneinander liegen. Die dynamische Abdichtung der Welle erfolgt nicht mehr dadurch, dass das Dichtelement an der Welle dichtend anliegt, sondern dadurch, dass das Dichtelement der einen Dichteinheit an einem Dichtelement der anderen Dichteinheit dichtend anliegt.

Fig. 1 zeigt eine Wellendichtung mit den beiden Dichteinheiten 1 und 2, die jeweils als Radialwellendichtringe ausgebildet sind. Die Dichteinheit 1 hat ein Gehäuse 3, das aus metallischem Werkstoff, aber auch aus hartem Kunststoff bestehen kann. Das Gehäuse 3 weist einen zylindrischen Mantel 4 auf, der an einem Ende in einen radial nach innen gerichteten Flansch 5 übergeht. Er ist mit einer zentralen Öffnung 6 versehen, durch welche die abzudichtende Welle 7 ragt. Der Mantel 4 und der Radialflansch 5 haben im Ausführungsbeispiel gleiche Wandstärke. Je nach Ausbildung der Wellendichtung können der Mantel 4 und der Radialflansch 5 auch unterschiedliche Wandstärken aufweisen.

An der Innenseite des Radialflansches 5 ist ein Befestigungsteil 8 einer Dichtscheibe 9 befestigt. Sie besteht vorteilhaft aus PTFE oder aus glasfaserfreien PTFE-Compounds. Der Befestigungsteil 8 ist an den Radialflansch 5 in geeigneter Weise angebunden, beispielsweise angeklebt. Um eine sichere Verbindung zwischen dem Gehäuse 3 und der Dichtscheibe 9 zu erreichen, entspricht die radiale Breite des Befestigungsteiles 8 annähernd der radialen Breite des Radialflansches 5 des Gehäuses 3.

Der Befestigungsteil 8 geht etwa in Höhe des Randes 10 der Öffnung 6 in einen eine Dichtlippe bildenden Dichtteil 11 über, der in der Einbaulage gegenüber dem Befestigungsteil 8 elastisch verformt ist.

Der Gehäusemantel 4 hat eine solche axiale Breite, dass er die Dichtscheibe 9 mit dem Dichtteil 11 axial überragt. Mit dem Gehäusemantel 4 wird die Dichteinheit 1 in einen Einbauraum eines Aggregates eingepresst.

Die Dichteinheit 2 hat ebenfalls ein Gehäuse 12 mit einem zylindrischen Mantel 13 und einem Radialflansch 14. Mit dem zylindrischen Mantel 13 ist das Gehäuse 12 drehfest auf der Welle 7 befestigt, vorzugsweise mittels eines Presssitzes. Der Radialflansch 14 an einem axialen Ende des Mantels 13 erstreckt sich radial nach außen und liegt in Höhe des freien Endes des Mantels 4 des Gehäuses 3. Vorteilhaft liegt die vom Mantel 13 abgewandte Außenseite 15 des Radialflansches 14 in der gleichen Radialebene wie die vorteilhaft ebene Stirnseite 16 des Mantels 4 des Gehäuses 3. Das Gehäuse 12 besteht ebenfalls aus metallischem Werkstoff oder einem harten Kunststoff.

Die vom Mantel 4 abgewandte Außenseite 17 des radial nach innen verlaufenden Radialflansches 5 liegt vorteilhaft mit der vorzugsweise ebenen freien Stirnseite 18 des Mantels 13 des Gehäuses 12 in einer gemeinsamen Radialebene.

An der Innenseite des Radialflansches 14 ist ein Befestigungsteil 19 einer Dichtscheibe 20 befestigt. Sie besteht vorteilhaft aus PTFE oder glasfaserfreien PTFE-Compounds. Zur sicheren Befestigung der Dichtscheibe 20 hat der Befestigungsteil 19 vorteilhaft etwa gleiche radiale Breite wie der Radialflansch 14.

Etwa in Höhe des freien Endes des Radialflansches 14 geht der Befestigungsteil 19 in einen eine Dichtlippe bildenden Dichtteil 21 über, der gegenüber dem Befestigungsteil 19 in der Einbaulage elastisch gebogen ist.

Der Mantel 13 des Gehäuses 12 steht axial über das freie Ende des Dichtteiles 21 vor.

In der Einbaulage der Wellendichtung liegen die beiden Dichtteile 11, 21 der Dichteinheiten 1, 2 unter Kraft flächig aneinander. Die beiden Dichteinheiten 1, 2 sind hierbei so angeordnet, dass die freien Enden der Dichtteile 11, 21 Abstand von den Radialflanschen 5, 14 der Gehäuse 3, 12 haben. Da die Dichteinheit 2 drehfest mit der Welle 7 verbunden ist, dreht der Dichtteil 21 gegenüber dem Dichtteil 11.

Die Wellendichtung erlaubt größere Toleranzen in radialer und auch in axialer Richtung. Die beiden Dichtteile 11, 21 werden entsprechend den Toleranzen mehr oder weniger stark elastisch gebogen. Die Wellendichtung kann darum einfach montiert werden.

Da die beiden Dichtscheiben 9, 20 vorteilhaft aus dem gleichen Material bestehen, vorzugsweise aus PTFE oder glasfaserfreien PTFE-Compounds, tritt zwischen den beiden Dichtteilen 11, 21 nur eine sehr geringe Reibung auf.

Die Dichtelemente 9, 20 können auch aus Elastomerwerkstoffen oder anderen geeigneten Kunststoffen hergestellt sein. In diesem Falle ist es vorteilhaft, wenn zumindest die Dichtteile 11, 21 an ihren Berührflächen mit einer reibungsreduzierenden Beschichtung versehen sind, beispielsweise einer DLC (diamond-like carbon)-Beschichtung.

Fig. 1 zeigt beispielhaft, dass die beiden Dichtteile 11, 21, im Axialschnitt gesehen, unter einem Winkel α von etwa 45° zur Radialebene aneinander liegen. Die Dichtfläche zwischen den beiden Dichtteilen 11, 21 liegt somit auf dem Mantel eines Kegels, dessen Achse die Achse der Wellendichtung ist.

Je nach den Einbauverhältnissen sowie der Größe der Dichtscheiben 9, 20 kann dieser Winkel α unterschiedlich sein.

Fig. 2 zeigt beispielhaft eine Wellendichtung, bei welcher die Dichtteile 11, 21 der beiden Dichtscheiben 9, 20, im Axialschnitt gesehen, kürzer sind als bei der Ausführungsform gemäß Fig. 1. Im Übrigen ist die Wellendichtung gleich ausgebildet wie das vorige Ausführungsbeispiel. Der Winkel a, unter dem die beiden Dichtteile 11, 21 geneigt angeordnet sind, beträgt bei dieser Ausführungsform beispielhaft etwa 55°.

Bei der Wellendichtung gemäß Fig. 3 haben die beiden Dichteinheiten 1, 2 die Gehäuse 3, 12 mit dem zylindrischen Mantel 4, 13 und dem anschließenden Radialflansch 5, 14. Die radiale Breite der Radialflansche 5, 14 ist geringer als bei den beiden vorigen Ausführungsbeispielen.

Der Mantel 4 und der radial nach innen gerichtete Radialflansch 5 des Gehäuses 3 sind auf ihrer Außenseite mit einer aus elastomerem Material bestehenden Ummantelung 22 versehen. Sie geht in einen lippenförmigen Dichtteil 23 über, der durch die Öffnung 6 des Radialflansches 5 ragt.

Der Mantel 13 und der radial nach außen gerichtete Radialflansch 14 des Gehäuses 12 sind ebenfalls mit einer Ummantelung 24 aus elastomerem Material bedeckt. Sie geht in einen lippenförmigen Dichtteil 25 über, der durch die Öffnung 6 des Ringflansches 14 ragt.

Die beiden Dichtteile 23, 25 bestehen bevorzugt aus geeigneten PTFE-Werkstoffen und liegen unter Radialkraft dichtend und flächig aneinander. Der so gebildete dynamische Dichtbereich liegt innerhalb des von den beiden Gehäusen 3, 12 umschlossenen Ringraumes. Bestehen die beiden Dichtteile 23, 25 aus elastomeren Werkstoffen, dann sind die aneinander liegenden Flächen der Dichtteile 23, 25 vorteilhaft mit einer reibarmen Beschichtung versehen, zum Beispiel mit einer DLC-Beschichtung.

Die Dichtteile 23, 25 liegen in der Einbaulage unter Radialkraft flächig aneinander. Der Neigungswinkel a, unter dem die Dichtteile 23, 25 zur Radialen geneigt angeordnet sind, liegt bei etwa 70°.

Der den Mantel 4 des Gehäuses 3 außenseitig überdeckende Teil der Ummantelung 22 bildet in der Einbaulage eine statische Abdichtung gegenüber der Wandung des Einbauraumes des Aggregates. Der den Radialflansch 5 bedeckende Teil der Ummantelung 22 kann ebenfalls eine statische Abdichtung in der Einbaulage bilden, mit welcher die Dichteinheit 1 am Boden des Einbauraumes dichtend anliegt. Die Ummantelung 24 des Gehäuses 12 bildet die statische Abdichtung gegenüber der Welle 7.

Wie bei den vorigen Ausführungsbeispielen bestehen die Dichtteile 23, 25 aus dem gleichen Material. Im Unterschied zu den vorigen Ausführungsformen bilden die beiden Dichtelemente 22, 24 sowohl die statische Abdichtung als auch die dynamische Abdichtung.

Fig. 4 zeigt ein Ausführungsbeispiel, bei dem die beiden Dichtteile aus unterschiedlichen Materialien bestehen. Auch in diesem Falle liegen die Dichtteile 21, 26 flächig aneinander und bilden die dynamische Abdichtung. Die Dichteinheit 1 hat wiederum das Gehäuse 3 mit dem Mantel 4. Im Unterschied zu den vorigen Ausführungsbeispielen ist der Mantel 4 im Axialschnitt gestuft ausgebildet und hat den radial äußeren zylindrischen Mantelabschnitt 4a und den radial inneren zylindrischen Mantelabschnitt 4b. Er geht in den radial nach innen gerichteten Radialflansch 5 über. Der Radialflansch 5 sowie der Mantelabschnitt 4b sind auf ihrer Außenseite mit einem Überzug 28 bedeckt, der aus elastomerem Material besteht. Im Bereich des Mantelabschnittes 4b ist der Überzug 28 mit einer Profilierung 29 versehen, die vorteilhaft im Axialschnitt Wellenprofil hat. In der Einbaulage wird die Profilierung 29 elastisch verformt, wodurch eine optimale statische Abdichtung gewährleistet ist. Der Überzug 28 geht in den lippenförmigen Dichtteil 30 über, der durch die Öffnung 6 des Radialflansches 5 ragt.

Die Dichteinheit 2 hat das Gehäuse 12 mit dem zylindrischen Mantel 13, der entsprechend den Ausführungsformen nach den Fig. 1 und 2 mit Presssitz auf der Welle 7 sitzt und in den radial nach außen gerichteten Flansch 14 übergeht. Das Gehäuse 12 ist im Querschnitt gleich ausgebildet wie bei der Ausführungsform nach Fig. 3. Am Radialflansch 14 ist die Dichtscheibe 20 mit ihrem Befestigungsteil 19 befestigt. Er ist an der Außenseite des Radialflansches 14 vorgesehen und erstreckt sich durch die Öffnung 6 des Radialflansches.

Der Mantel 4 des Gehäuses 3 hat eine solche axiale Breite, dass er, im Axialschnitt gemäß Fig. 4 gesehen, axial über den Befestigungsteil 19 der Dichtscheibe 20 ragt.

Die beiden Dichtteile 21, 26 liegen unter Radialkraft flächig aneinander. Der Winkel α, den die Dichtfläche mit der Vertikalen einschließt, beträgt bei diesem Ausführungsbeispiel etwa 75°.

Die Dichtscheibe 20 ist vorteilhaft aus PTFE oder vorzugsweise glasfaserfreiem PTFE-Compound gefertigt. Der Dichtteil 26 als Bestandteil des Überzuges 28 ist zur Reibungsverminderung vorteilhaft an seiner Anlagefläche am Dichtteil 21 mit einer reibungsarmen Beschichtung versehen, die beispielsweise eine DLC-Beschichtung sein kann.

Da die beiden Dichtteile 21, 26 aus unterschiedlichen Materialien bestehen, kann die Wellendichtung an die gegeneinander abzudichtenden Medien optimal angepasst werden.

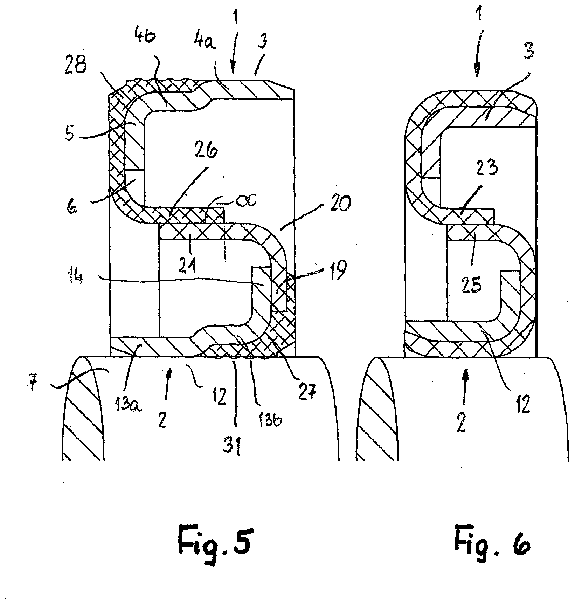

Bei der Ausführungsform gemäß Fig. 5 beträgt der Winkel a, unter dem die Dichtfläche, im Axialschnitt gesehen, zur Vertikalen liegt, 90°. Die Wellendichtung hat die beiden Dichteinheiten 1, 2 mit dem Gehäuse 3, 12. Das Gehäuse 3 hat die beiden zylindrischen, radial gegeneinander versetzten Mantelabschnitte 4a, 4b. Das Gehäuse 12 hat entsprechende Mantelabschnitte 13a, 13b, die radial versetzt zueinander liegen. Mit dem radial äußeren Mantelabschnitt 13a sitzt das Gehäuse 12 drehfest auf der Welle 7. Der Mantelabschnitt 4a des Gehäuses 3 liegt unter Presssitz an der Wandung des Einbauraumes des Aggregates an. Das Gehäuse 3 ist entsprechend der Ausführungsform gemäß Fig. 4 teilweise mit dem Überzug 28 außenseitig bedeckt. Er deckt den radial inneren Mantelabschnitt 4b über seine axiale Breite sowie den Radialflansch 5 über seine radiale Breite vollständig ab und geht in den Dichtteil 26 über, der durch die Öffnung 6 des Ringflansches 5 ragt.

Der radial nach außen versetzte Mantelabschnitt 13b des Gehäuses 12 ist durch einen Überzug 27 über seine axiale Breite bedeckt. Er ist an seiner radialen Innenseite mit einer Profilierung 31 versehen, die im Axialschnitt Wellenform hat. Diese Profilierung 31 ist so ausgebildet, dass sie beim Aufpressen des Gehäuses 12 auf die Welle 7 elastisch verformt wird. Dadurch ergibt sich eine hervorragende statische Abdichtung der Welle 7.

Auf der Außenseite des Radialflansches 14 des Gehäuses 12 ist der Befestigungsteil 19 der Dichtscheibe 20 befestigt. Der Überzug 27 erstreckt sich auch über die vom Radialflansch 14 abgewandte Außenseite des Befestigungsteiles 19. Der Überzug 27 erstreckt sich etwa bis in Höhe des freien Endes des Radialflansches 14.

Auch bei dieser Ausführungsform bestehen die beiden Dichtteile 21, 26 aus verschiedenen Materialien und sind in ihrem Berührbereich so ausgebildet, dass nur geringe Reibung entsteht.

Die Wellendichtung gemäß Fig. 6 zeichnet sich dadurch aus, dass ihre beiden Dichteinheiten 1, 2 im Querschnitt gleich ausgebildet sind. Sie haben darüber hinaus eine Ausbildung entsprechend der Ausführungsform gemäß Fig. 3. Der Unterschied zu dieser Ausführungsform besteht lediglich darin, dass die beiden Gehäuse 3, 12 etwas kleineren Radialabstand voneinander haben. Dies führt dazu, dass die beiden Dichtteile 23, 25, im Axialschnitt gesehen, rechtwinklig zur Vertikalen angeordnet sind. Wie bei den vorigen Ausführungsbeispielen liegen die beiden Dichtteile 23, 25 unter Radialdruck aneinander.

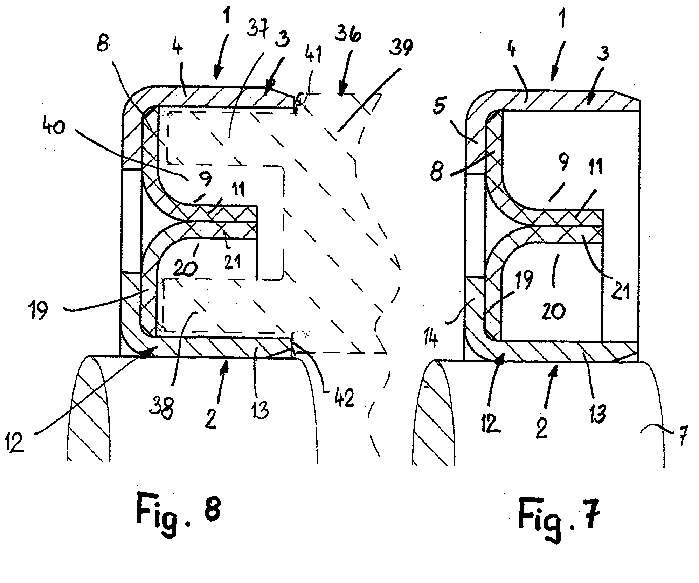

Die Wellendichtung gemäß Fig. 7 hat die beiden Dichteinheiten 1, 2 mit dem Gehäuse 3, 12. Die beiden Radialflansche 5, 14 der Gehäuse 3, 12 liegen nicht mehr, wie bei den vorigen Ausführungsbeispielen, mit axialem Abstand zueinander, sondern in der gleichen Radialebene. Der Mantel 4, 13 der beiden Gehäuse 3, 12 liegt auf gleicher Höhe, in Radialrichtung gesehen. Die beiden Dichtscheiben 9, 20 sind mit ihren Befestigungsteilen 8, 19 in der beschriebenen Weise an der Innenseite der Radialflansche 5, 14 befestigt. Die Dichtteile 11, 21 der beiden Dichtscheiben 9, 20 sind nach innen in den vom Mantel 4, 13 der beiden Gehäuse 3, 12 radial begrenzten Aufnahmeraum elastisch gebogen und liegen unter Radialkraft flächig aneinander. Die Dichtfläche zwischen den beiden Dichtteilen 11, 21 verläuft entsprechend den Ausführungsformen gemäß den Fig. 5 und 6 zylinderförmig und koaxial zur Achse der Wellendichtung. Die beiden Gehäuse 3, 12 ragen mit ihrem Mantel 4, 13 axial über die Dichtteile 11, 20.

Das Gehäuse 3 sitzt mit seinem Mantel 4 mit Presssitz im Einbauraum des jeweiligen Aggregates. Der Mantel 13 des Gehäuses 12 sitzt mit Pressung und damit drehfest auf der Welle 7.

Fig. 8 zeigt ein beispielhaftes Montagewerkzeug 36, mit dem die beiden Dichteinheiten 1, 2 der Wellendichtung gemäß Fig. 7 gleichzeitig montiert werden können. Das Montagewerkzeug hat einen äußeren Ring 37 und einen inneren Ring 38. Sie liegen koaxial zueinander und stehen von einem Grundkörper 39 ab. Der Außendurchmesser des radial äußeren Ringes 37 ist geringfügig kleiner als der Innendurchmesser des Mantels 4 des Gehäuses 3. Der Innendurchmesser des radial inneren Ringes 38 ist geringfügig größer als der Außendurchmesser des Mantels 13 des Gehäuses 12. Die beiden Ringe 37, 38 begrenzen einen Ringraum 40, in den die beiden aneinander liegenden Dichtteile 11, 21 der Dichtscheiben 9, 20 ragen. Der Ringraum 40 ist radial so breit, dass die Dichtteile 11, 21 bei der Montage der Wellendichtung die Ringe 37, 38 nicht berühren.

Am Übergang vom Grundkörper 39 in die koaxialen Ringe 37, 38 ist jeweils eine Ringfläche 41, 42 vorgesehen, an der die beiden Dichteinheiten 1, 2 mit der Stirnseite des Mantels 4, 13 beim Montagevorgang anliegen. Die Ringe 37, 38 haben Abstand vom Befestigungsteil 8, 19 der Dichtscheiben 9, 20. Bei der Montage kommt somit nur das Gehäuse 3, 12 der Dichteinheiten 1, 2 in Kontakt mit dem Montagewerkzeug 36. Mit ihm können beide Dichteinheiten 1, 2 gleichzeitig eingebaut werden, so dass sich eine sehr einfache Montage der Wellendichtung ergibt.

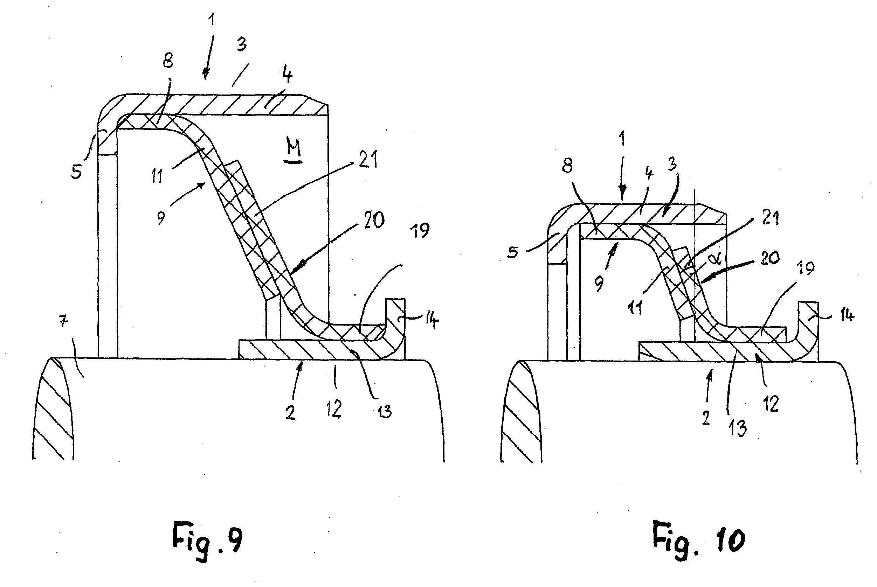

Während bei den zuvor beschriebenen Ausführungsformen zumindest die Gehäuse der beiden Dichteinheiten im Querschnitt gleich ausgebildet sind, ist bei der Wellendichtung gemäß Fig. 9 vorgesehen, die beiden Gehäuse 3, 12 im Querschnitt unterschiedlich zu gestalten. Das Gehäuse 3 hat den zylindrischen Mantel 4, mit dem die Wellendichtung mit Presssitz an der Wandung des Einbauraumes des Aggregates anliegt. Der Mantel 4 geht an einem Ende in den radial nach innen gerichteten Flansch 5 über. Er ist, im Axialschnitt gesehen, wesentlich kürzer als der Mantel 4. An der Innenseite des Mantels 4 ist der Befestigungsteil 8 der Dichtscheibe 9 befestigt. Der Befestigungsteil 8 reicht bis zum Radialflansch 5. Der Befestigungsteil 8 geht in den Dichtteil 11 über, der elastisch schräg nach innen gebogen ist. Der Befestigungsteil 8 hat eine ausreichend lange axiale Breite, um eine zuverlässige Befestigung der Dichtscheibe 9 am Gehäuse 3 der Dichteinheit 1 zu gewährleisten.

Das Gehäuse 12 der Dichteinheit 2 hat den zylindrischen Mantel 13, mit dem das Gehäuse 12 unter Presssitz auf der Welle 7 drehfest aufliegt. Das Gehäuse 12 ist so vorgesehen, dass der zylindrische Mantel 13 axial über den Mantel 4 des Gehäuses 3 vorsteht. Der Mantel 13 geht an einem Ende in den radial nach außen gerichteten Flansch 14 über, der sich somit im Bereich neben dem Gehäuse 3 befindet. Die beiden Gehäuse 3, 12 können beispielhaft aus metallischem Werkstoff, aber auch aus hartem Kunststoff bestehen. Der Befestigungsteil 19 ist an der Innenseite des Gehäuses 13 befestigt und erstreckt sich bis zum Radialflansch 14. Der Dichtteil 21 ist elastisch abgebogen und liegt in der Einbaulage flächig auf dem Dichtteil 11 der Dichtscheibe 9 auf. Die Dichtfläche zwischen den beiden Dichtteilen 11, 21 liegt wie bei den Ausführungsformen gemäß den Fig. 1 bis 4 auf einem Kegelmantel. Beide Dichtteile 11, 21 liegen unter elastischer Vorspannung aneinander an, so dass eine einwandfreie dynamische Abdichtung gewährleistet ist. Je nach dem radialen Abstand zwischen den beiden Gehäusen 3, 12 sind die Dichtteile 11, 21 unterschiedlich lang. Der Dichtbereich, der durch die flächig aneinander liegenden Dichtteile 11, 21 bestimmt ist, wird vom Mantel 4 des äußeren Gehäuses 3 axial überragt, so dass der Dichtbereich geschützt im Aufnahmeraum zwischen den beiden Gehäusen 3, 12 liegt.

Bei Rotation der Welle 7 kann der Dichtteil 21 bei entsprechenden Drehzahlen der Welle 7 vom Dichtteil 11 abheben, so dass keine Reibungsverluste mehr entstehen. Darüber hinaus wird durch den rotierenden Dichtteil 21 erreicht, dass von ihm abzudichtendes Medium zurück in den Medienraum M geschleudert wird.

Die beiden Dichtscheiben 9, 20 bestehen aus dem gleichen Material, vorzugsweise aus PTFE oder vorzugsweise glasfaserfreien PTFE-Compounds. Dadurch ist eine sehr geringe Reibung im Dichtbereich sichergestellt. Es ist, wie auch bei den entsprechenden vorigen Ausführungsformen, möglich, die Dichtteile aus Elastomerwerkstoffen oder anderen geeigneten Kunststoffen herzustellen. In diesem Falle ist eine Beschichtung mit geringem Reibwert zu empfehlen.

Die jeweiligen Dichtteile können auch aus unterschiedlichen Werkstoffen bestehen, z.B. eine PTFE-Dichtlippe gegen eine Dichtlippe aus elastomerem Werkstoff. Dies ist auch bei den anderen Ausführungsbeispielen möglich.

Die Ausführungsform gemäß Fig. 10 entspricht weitgehend dem Ausführungsbeispiel nach Fig. 9. Die beiden Gehäuse 3, 12 der Dichteinheiten 1, 2 haben einen kleineren radialen Abstand voneinander als beim vorigen Ausführungsbeispiel. Die beiden Dichtscheiben 9, 20 liegen mit ihren Dichtteilen 11, 21 unter elastischer Vorspannung flächig dichtend aneinander. Die Dichtfläche liegt wiederum auf einem Kegelmantel. Im Unterschied zur vorigen Ausführungsform haben die Dichtteile 11, 21 geringere Länge.

Der Neigungswinkel α der Dichtfläche beträgt beispielhaft etwa 25°. Die Dichtscheiben 9, 20 sind mit ihrem Befestigungsteil 8, 19 an den einander zugewandten Innenseiten des Mantels 4 bzw. 13 der Gehäuse 3, 12 befestigt. Im Unterschied zur vorigen Ausführungsform erstrecken sich die Befestigungsteile 8, 19 nicht bis zu den Radialflanschen 5, 14 der Gehäuse 3, 12. Der Dichtbereich zwischen den beiden Dichtteilen 11, 21 wird vom Mantel 4 des Gehäuses 3 sowie vom Mantel 13 des Gehäuses 12 in beiden Richtungen axial überragt. Dadurch befindet sich dieser Dichtbereich innerhalb des von den beiden Gehäusen 3, 12 radial begrenzten Aufnahmeraumes.

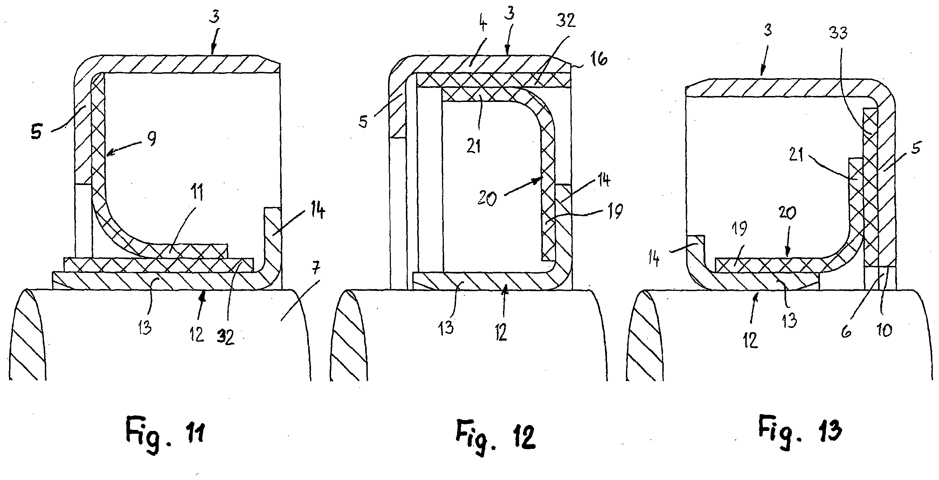

Die Wellendichtung gemäß Fig. 11, die nicht Teil der Erfindung ist, unterscheidet sich von den vorigen Ausführungsbeispielen dadurch, dass der Dichtteil 11 der Dichtscheibe 9 auf der Außenseite einer Hülse 32 flächig aufliegt. Sie ist auf dem Mantel 13 des Gehäuses 12 befestigt, das mit dem Mantel 13 drehfest auf der Welle 7 befestigt ist. Die Hülse 32 besteht aus reibungsarmem Material, vorteilhaft aus PTFE. Die Hülse 32 kann in vorteilhafter Weise und kostengünstig durch Abstechen eines extrudierten PTFE-Rohres hergestellt werden. Die Hülse 32 umgibt den Mantel 13 des Gehäuses 12 nahezu über dessen gesamte axiale Breite.

Der Dichtteil 11 liegt flächig auf der Außenseite der Hülse 32 auf. Die dadurch gebildete Dichtfläche liegt somit auf einem Zylindermantel, der koaxial zur Achse der Wellendichtung verläuft.

Die Dichtscheibe 9 ist entsprechend dem Ausführungsbeispiel gemäß den Fig. 1 und 2 am Radialflansch 5 des Gehäuses 3 befestigt. Darum kann auf die Beschreibung bezüglich dieser Ausführungsbeispiele verwiesen werden. Der zylindrische Mantel 13 des Gehäuses 12 ragt axial über den Ringflansch 5 des Gehäuses 3 vor. Die Hülse 32 steht axial ebenfalls über den Ringflansch 5 vor. Der Dichtteil 11 der Dichtscheibe 9 sowie der Mantel 13 des Gehäuses 12 sind ausreichend breit, so dass eine einwandfreie dynamische Abdichtung erreicht wird. Der Radialflansch 14 des Gehäuses 12 steht radial über den Dichtteil 11 vor und schützt diesen sowie die Hülse 32.

Bei der Ausführungsform gemäß Fig. 12, die nicht Teil der Erfindung ist, ist die zylindrische Hülse 32 an der zylindrischen Innenseite des Mantels 4 des Gehäuses 3 befestigt, beispielsweise angeklebt. Sie bedeckt den Mantel 4 an seiner Innenseite vollständig, so dass der Dichtteil 21 der Dichtscheibe 20 zuverlässig dichtend an der Innenwand der Hülse 32 zur Anlage kommen kann. Die Dichtscheibe 20 ist mit ihrem Befestigungsteil 19 entsprechend den Ausführungsformen nach den Fig. 1 und 2 an der Innenseite des Radialflansches 14 des Gehäuses 12 in der beschriebenen Weise befestigt.

Das Gehäuse 12 mit der Dichtscheibe 20 ist gleich ausgebildet wie bei den Ausführungsformen gemäß den Fig. 1 und 2, so dass auf die dortige Beschreibung verwiesen werden kann.

Der Radialflansch 5 des Gehäuses 3 steht radial nach innen über den Dichtteil 21 und damit die Hülse 32 vor, wodurch diese durch den Radialflansch 5 geschützt sind.

Die Hülse 32 erstreckt sich bis zur Stirnseite 16 des Gehäusemantels 4. Das freie Ende des Mantels 13 des Gehäuses 12 steht gegenüber dem Radialflansch 5 des Gehäuses 3 axial zurück.

Bei der Ausführungsform nach Fig. 13, die nicht Teil der Erfindung ist, sind die Gehäuse 3 und 12 in Bezug auf die Wellendichtung gemäß Fig. 12 verdreht angeordnet. Der Befestigungsteil 19 der Dichtscheibe 20 ist an der dem Gehäuse 3 zugewandten Außenseite des Mantels 13 des Gehäuses befestigt. Der Dichtteil 21 liegt an einer Dichtscheibe 33 flächig an, deren Achse die Achse der Wellendichtung ist. Die Dichtscheibe 33 ist an der Innenseite des Radialflansches 5 des Gehäuses 3 befestigt und erstreckt sich bis zum Rand 10 der Öffnung 6 des Radialflansches 5. Die Dichtscheibe 33 bedeckt die gesamte Innenseite des Radialflansches 5.

Die Dichtfläche zwischen dem Dichtteil 21 und der Dichtscheibe 33 liegt in einer Radialebene der Wellendichtung. Die beiden Dichtscheiben, 20, 33 können aus dem gleichen Material bestehen, vorzugsweise aus PTFE oder glasfaserfreien PTFE-Compounds. Die Dichtscheibe 20 und/oder die Dichtscheibe 33 können aber auch aus Elastomerwerkstoffen oder geeigneten Kunststoffen hergestellt sein. Zur Reibungsverminderung ist dann im Dichtbereich eine entsprechende Beschichtung des Dichtteils 21 bzw. der Dichtscheibe 33 vorgesehen.

Der Radialflansch 14 des Gehäuses 12 überragt radial den Befestigungsteil 19 der Dichtscheibe 20. Außerdem ist der Außendurchmesser des Radialflansches 14 größer als der Durchmesser der Öffnung 6 des Gehäuses 3. Bei den vorigen Ausführungsbeispielen sind die beiden Gehäuse 3, 12 jeweils so ausgebildet, dass der Durchmesser der Öffnung 6 größer ist als der Außendurchmesser des Radialflansches 14 des Gehäuses 12.

Die Dichtscheibe 33 kann sehr kostengünstig von extrudierten PTFE-Rohren abgestochen werden, wenn sie aus diesem Material besteht.

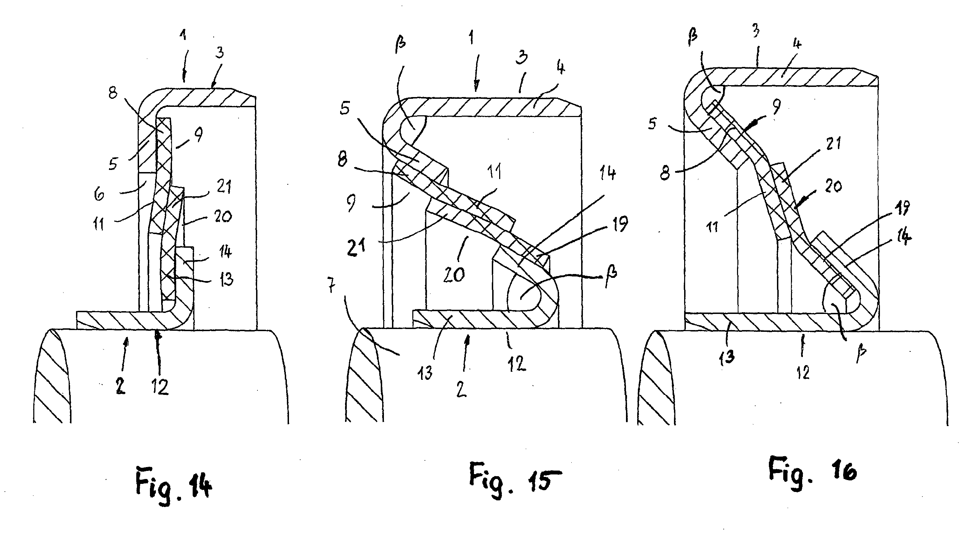

Fig. 14 zeigt eine Wellendichtung mit den beiden Dichteinheiten 1, 2. Die Dichtscheiben 9, 20 sind mit ihrem jeweiligen Befestigungsteil 8, 13 am Radialflansch 5, 14 der Gehäuse 3, 12 befestigt. Die beiden Dichtteile 11, 21 der Dichtscheiben 9, 20 liegen flächig unter elastischer Vorspannung aneinander an. Die Dichtfläche liegt auf einem Kegelmantel. Die beiden Gehäuse 3, 12 sind so angeordnet, dass ihre Radialflansche 5, 14, in Radialrichtung gesehen, mit nur geringem Abstand nebeneinander liegen. Der Dichtteil 11 der Dichtscheibe 9 ragt teilweise in die Öffnung 6 des Radialflansches 5.

Die Wellendichtung gemäß Fig. 15 hat die beiden Dichteinheiten 1, 2 mit den Gehäusen 3, 12. Wie bei den Ausführungsformen nach den Fig. 1, 2, 4, 5 und 7 bis 14 sitzt das Gehäuse 12 mit seinem zylindrischen Mantel 13 drehfest auf der Welle 7. Im Unterschied zu den vorigen Ausführungsbeispielen verläuft der Flansch 5, 14 der Gehäuse 3, 12 nicht mehr radial, sondern unter einem spitzen Winkel β zum zylindrischen Mantel 4, 13 des Gehäuses 3, 12. Die Dichtscheiben 9, 20 sind an den Außenseiten der Flansche 5, 14 mit ihrem Befestigungsteil 8, 19 befestigt.

Die beiden Gehäuse 3, 12 sind so angeordnet, dass ihre Flansche 5, 14 radial versetzt zueinander gegeneinander gerichtet sind. Dabei ist der radiale Abstand zwischen den beiden Gehäusen 3, 12 bzw. ihrer Flansche 5, 14 so gewählt, dass die Dichtteile 11, 21 der beiden Dichtscheiben 9, 20 unter elastischer Verformung dichtend aneinander liegen. Je nach Größe des Winkels β zwischen dem Gehäusemantel 4, 13 und dem Flansch 5, 14 hat die Kegelmantelfläche, in welcher die Dichtfläche zwischen den Dichtteilen 11, 21 gebildet wird, unterschiedlich großen Kegelwinkel. Die Gehäuse 3, 12 sowie die Dichtscheiben 9, 20 können entsprechend den zuvor beschriebenen Ausführungsformen aus den geeigneten Materialien bestehen.

Bei der Ausführungsform nach Fig. 16 ist der Winkel β zwischen dem Mantel 4 des Gehäuses 3 bzw. dem zylindrischen Mantel 13 des Gehäuses 12 größer als bei der Ausführungsform gemäß Fig. 15. Die beiden Dichtscheiben 9, 20 sind mit ihren Befestigungsteilen 8, 19 im Gegensatz zum Ausführungsbeispiel nach Fig. 15 an der Innenseite der Flansche 5, 14 der Gehäuse 3, 12 befestigt. Die beiden Gehäuse 3, 12 sind so zueinander angeordnet, dass die Dichtteile 11, 21 der beiden Dichtscheiben 9, 20 unter elastischer Verformung flächig aneinander liegen. Aufgrund des größeren Winkels β hat der Kegelmantel, auf dem die Dichtfläche zwischen den beiden Dichtteilen 11, 21 liegt, einen größeren Kegelwinkel als bei der Wellendichtung nach Fig. 15. Die beiden Flansche 5, 14 der Gehäuse 3, 12 liegen fluchtend zueinander. Die Gehäuse 3, 12 sowie die Dichtscheiben 9, 20 können, wie anhand der vorigen Ausführungsbeispiele beschrieben, aus den unterschiedlichsten geeigneten Materialien bestehen.

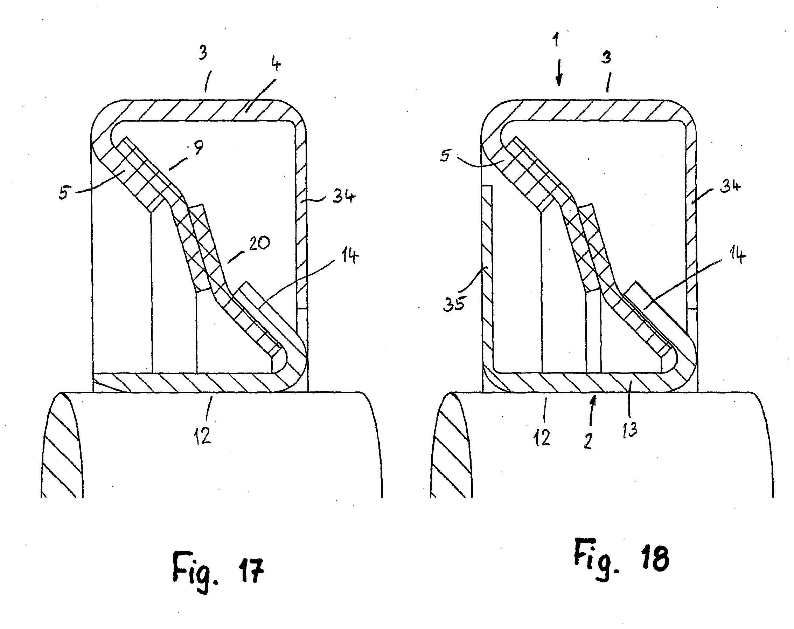

Die Wellendichtung gemäß Fig. 17 entspricht im Wesentlichen der Ausführungsform gemäß Fig. 16. Der Unterschied besteht darin, dass das Gehäuse 3 nicht nur den Flansch 5 an einem Ende des zylindrischen Mantels 4 aufweist, sondern einen weiteren Radialflansch 34 am anderen Ende des Mantels 4. Dieser Radialflansch 34 überragt den Flansch 5 radial nach innen und reicht bis nahe an den Flansch 14 des Gehäuses 12. Vorteilhaft hat der Radialflansch 34 geringere Wandstärke als der zylindrische Mantel 4 des Gehäuses 3 und ermöglicht dadurch eine einfache Umformung. Durch den Radialflansch 34 ist der Dichtbereich zwischen den beiden Dichtscheiben 9, 20 geschützt. Außerdem hält der Radialflansch 34 die beiden Dichteinheiten auch im nicht montierten Zustand zusammen und bildet dadurch eine Art Kassettendichtung.

Die Ausführungsform nach Fig. 18 entspricht weitgehend dem Ausführungsbeispiel nach Fig. 17. Das Gehäuse 12 weist an seinem einen axialen Ende nicht nur den Flansch 14, sondern am anderen axialen Ende den Radialflansch 35 auf. Er überragt den Flansch 14 radial nach außen und reicht bis nahe an den Flansch 5 des Gehäuses 3. Der Radialflansch 35 hat vorteilhaft geringere Wandstärke als der zylindrische Mantel 13 des Gehäuses 12. Im Ausführungsbeispiel haben die beiden Radialflansche 34, 35 der Gehäuse 3, 12 gleiche Wandstärke.

Während bei der Wellendichtung gemäß Fig. 17 der Radialflansch 34 des Gehäuses 3 den Flansch 14 des Gehäuses 12 überlappt, in Achsrichtung der Wellendichtung gesehen, findet bei der Welleneinheit gemäß Fig. 18 eine radiale Überlappung, in Achsrichtung gesehen, zwischen beiden Radialflanschen 34, 35 und dem jeweiligen Flansch 5, 14 statt. Die beiden Gehäuse 3, 12 der Wellendichtung nach Fig. 18 bilden somit ein Gehäuse einer Kassettendichtung. Die beiden Gehäuse 3, 12 lassen sich nicht axial voneinander entfernen. Dadurch wird auch die Montage der Wellendichtung erleichtert. Die Gehäuse 3, 12 sowie die Dichtscheiben 9, 20 können in der beschriebenen Weise aus den geeigneten Materialien bestehen.

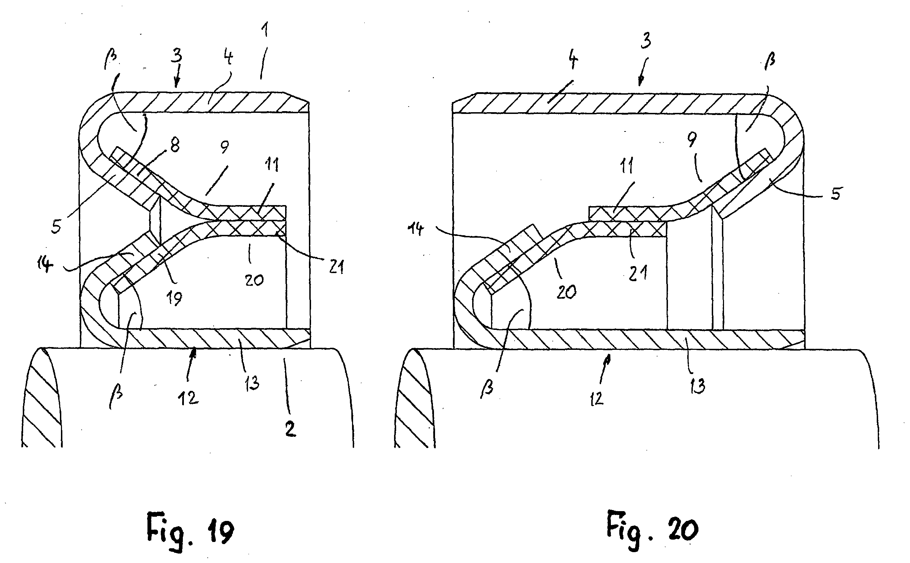

Die Wellendichtung gemäß Fig. 19 ähnelt der Wellendichtung gemäß den Fig. 7 und 8. Der Unterschied besteht lediglich darin, dass die Flansche 5, 14 der Gehäuse 3, 12 nicht radial verlaufen, sondern unter dem spitzen Winkel β zum zugehörigen Mantel 4, 13 der Gehäuse 3, 12 verlaufen. Beide Flansche 5, 14 ragen in den vom zylindrischen Mantel 4, 13 begrenzten Aufnahmeraum der Wellendichtung. Auf den Innenseiten der Flansche 5, 14 sind die Dichtscheiben 9, 20 mit ihrem Befestigungsteil 8, 19 in der beschriebenen Weise befestigt. Die Dichtteile 11, 21 der Dichtscheiben 9, 20 liegen flächig aneinander, wobei die Dichtfläche auf einem Zylindermantel liegt, dessen Achse durch die Achse der Wellendichtung gebildet wird.

Im Übrigen wird auf die Beschreibung der Wellendichtungen gemäß den Fig. 7 und 8 verwiesen.

Die Wellendichtung nach Fig. 20 ähnelt der Wellendichtung gemäß Fig. 15. Lediglich die Lage der Flansche 5, 14 der beiden Gehäuse 3, 12 ist im Vergleich zur Wellendichtung nach Fig. 15 vertauscht. Die beiden Flansche 5, 14 liegen wiederum unter dem spitzen Winkel β zum zylindrischen Mantel 4, 13 des jeweiligen Gehäuses 3, 12. Die beiden Gehäuse 3, 12 sind wiederum so angeordnet, dass die Dichtteile 11, 21 der Dichtscheiben 9, 20 flächig unter elastischer Verformung aneinander anliegen. Im Ausführungsbeispiel liegt die Dichtfläche zwischen den Dichtteilen 11, 21 auf einem Zylindermantel, dessen Achse die Achse der Wellendichtung ist. Je nach Relativlage der beiden Gehäuse 3, 12 zueinander und/oder der Ausbildung ihrer Flansche 5, 14 können die Dichtteile 11, 21 auch so flächig aneinander liegen, dass die Dichtfläche auf einem Kegelmantel liegt.

Die freien Enden der Dichtteile 11, 21 haben ausreichenden Abstand von den Flanschen 5, 14 der Gehäuse 3, 12, so dass die Dichtwirkung während des Einsatzes der Wellendichtung nicht beeinträchtigt wird.

In Bezug auf die Materialien des Gehäuses 3, 12 sowie der Dichtscheiben 9, 20 wird auf die Ausführungen zu den vorigen Ausführungsbeispielen verwiesen.

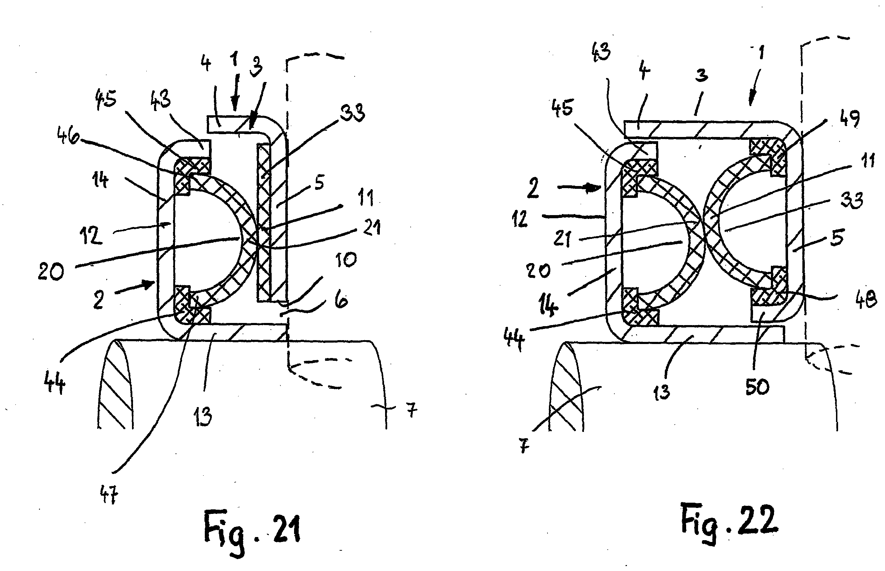

Bei der Wellendichtung gemäß Fig. 21, die nicht Teil der Erfindung ist, liegen die Dichtteile 11, 21 der beiden Dichteinheiten 1, 2 unter Axialkraft dichtend aneinander. Die Dichteinheit 1 hat das Gehäuse 3 mit dem zylindrischen Mantel 4 und dem radial nach innen gerichteten Flansch 5. Der Mantel 4 und der Flansch 5 haben vorteilhaft gleiche Wandstärke.

An der Innenseite des Radialflansches 5 ist die Dichtscheibe 33 befestigt, die sich vom Rand 10 der Öffnung 6 des Radialflansches 5 aus bis in Höhe des Überganges des Radialflansches 5 in den Mantel 4 erstreckt. Dadurch bedeckt die Dichtscheibe 33 die gesamte Innenseite des Radialflansches 5.

Die Dichtscheibe 33 ist, wie an Hand der vorigen Ausführungsformen beschrieben ist, mit dem Radialflansch 5 verbunden. Die Dichtscheibe 33 besteht vorzugsweise aus PTFE oder aus glasfaserfreien PTFE-Compounds. Die Dichtscheibe 33 kann aber auch aus Elastomerwerkstoffen oder geeigneten Kunststoffen bestehen. Zur Reibungsverminderung ist zumindest im Dichtbereich eine entsprechende Beschichtung der Dichtscheibe 33 vorgesehen.

Die Dichteinheit 2 hat das Gehäuse 12, das mit seinem zylindrischen Mantel 13 drehfest auf der Welle 7 sitzt. Das freie Ende des Mantels 13 liegt in Höhe der Außenseite des Radialflansches 5 des Gehäuses 3. Der Mantel 13 geht in den radial nach außen verlaufenden Radialflansch 14 über, der seinerseits am freien Ende in einen kurzen zylindrischen Mantel 43 übergeht. Er verläuft parallel zum längeren Mantel 13 und untergreift im dargestellten Ausführungsbeispiel geringfügig den Mantel 4 des Gehäuses 3. Der Außendurchmesser des Mantels 43 ist kleiner als der Innendurchmesser des Mantels 4.

An den Übergängen vom Radialflansch 14 zum Mantel 13 bzw. 43 ist jeweils ein im Axialhalbschnitt L-förmiger Haltering 44, 45 befestigt, der beispielsweise aus elastomerem Material bestehen kann. Die beiden Halteringe 44, 45 haben vorteilhaft gleiche Querschnittsform und dienen zur Verbindung des Dichtelementes 20 mit dem Gehäuse 12.

Das ringförmige Dichtelement 20 hat im Axialhalbschnitt etwa Halbkreisform und liegt unter elastischer Verformung und damit unter axialer Vorspannung an der Dichtscheibe 33 an. Die miteinander in Kontakt kommenden Bereiche der beiden Dichtelemente 20, 33 bilden die Dichtteile 11, 21, mit denen die Abdichtung erreicht wird. In der Einbaulage ist das Dichtelement 20 aufgrund der axialen Vorspannung so elastisch verformt, dass es flächig am Dichtelement 33 anliegt.

Das Dichtelement 20 ist im Bereich seiner beiden Längsränder 46, 47 mit den Halteringen 44, 45 verbunden. Die Verbindung zwischen dem Dichtelement 20 und den Halteringen 44, 45 kann in jeder geeigneten Weise erfolgen, beispielsweise durch Kleben.

Der äußere Haltering 45 ist so vorgesehen, dass er axial nicht über den Mantel 43 des Gehäuses 12 vorsteht. Die Halteringe 44, 45 sind mit radialem Abstand zueinander angeordnet und in geeigneter Weise am Gehäuse 12 befestigt, z.B. anvulkanisiert.

Die halbschlauchförmige Gestaltung kann beispielsweise dadurch erreicht werden, dass eine ebene Dichtscheibe in diese Form elastisch gebogen wird. Das Dichtelement 20 kann aber auch in dieser Form gefertigt worden sein.

Das Dichtelement 20 kann aus PTFE, glasfaserfreiem PTFE-Compound aus einem Elastomerwerkstoff oder einem anderen geeigneten Kunststoff bestehen. Aufgrund der in der Einbaulage halbschlauchförmigen Gestaltung des Dichtelementes 20 lässt sich sehr einfach eine ausreichend hohe Axialspannung im Kontaktbereich der beiden Dichtteile 11, 21 erreichen. Die beiden Dichtelemente 20, 33 können aus dem gleichen Material bestehen. Grundsätzlich besteht aber auch die Möglichkeit, die beiden Dichtelemente 20, 33 aus unterschiedlichen Materialien zu fertigen.

In Fig. 21 ist mit gestrichelten Linien angedeutet, dass auch das Gehäuse 3 drehfest mit der Welle verbunden werden kann. Die Wellendichtung ist in diesem Falle um 90° gedreht angeordnet, so dass nunmehr die beiden Dichtelemente 20, 33 unter radialer Vorspannung aneinander liegen.

Fig. 22 zeigt eine Wellendichtung, die nicht Teil der Erfindung ist, bei der beide Dichtelemente 20, 33 entsprechend dem Dichtelement 20 gemäß Fig. 21 ausgebildet sind. Die Dichtelemente 20, 33 sind im Axialhalbschnitt jeweils etwa halbkreisförmig ausgebildet und über die Halteringe 44, 45; 48, 49 mit dem Gehäuse 3 bzw. 12 der beiden Dichteinheiten 1, 2 verbunden. In der Einbaulage liegen die beiden halbschlauchförmigen Dichtelemente 20, 33 mit ihren Dichtteilen 11, 21 unter axialer Vorspannung und elastischer Verformung aneinander an.

Das Gehäuse 3 der Dichteinheit 1 hat den äußeren zylindrischen Mantel 4, der im Vergleich zur Ausführungsform gemäß Fig. 21 länger ausgebildet ist. Der Radialflansch 5 des Gehäuses 3 geht in den inneren zylindrischen Mantel 50 über. Er ist wesentlich kürzer als der koaxial zu ihm liegende äußere Mantel 4. Die beiden Halteringe 48, 49, die im Querschnitt L-förmig ausgebildet sind, sind in geeigneter Weise am Übergang vom Radialflansch 5 in die Mäntel 4, 50 befestigt. Der innere Haltering 48 ist so ausgebildet und an der Innenseite des Radialflansches 5 sowie des Mantels 50 befestigt, dass er nicht axial über den Mantel 50 vorsteht.

Das Gehäuse 12 der Dichteinheit 2 ist ähnlich ausgebildet wie bei der vorigen Ausführungsform. Lediglich der innere Mantel 13, mit dem die Dichteinheit 2 drehfest auf der Welle 7 sitzt, ist länger als bei der Ausführungsform gemäß Fig. 21. Der Mantel 13 erstreckt sich axial so weit, dass er vom Mantel 50 des Gehäuses 3 mit Abstand umgeben wird.

Der äußere zylindrische Mantel 43 des Gehäuses 12 wird vom äußeren Mantel 4 des Gehäuses 3 axial mit Abstand umgeben.

Vorteilhaft liegen in Einbaulage die Stirnseiten des Mantels 4, 13 der beiden Gehäuse 3, 12 und die Außenseiten der Radialflansche 5, 14 jeweils in einer gemeinsamen Radialebene.

Aufgrund der beschriebenen Ausbildung sind die Halteringe 44, 45 und 48, 49 in Radialrichtung versetzt zueinander angeordnet. Dadurch findet der Dichtkontakt zwischen den beiden Dichtelementen 20, 33 nicht exakt mittig statt, sondern leicht radial versetzt.

Die beiden Dichtelemente 20, 33 können abweichend vom dargestellten Ausführungsbeispiel aber auch so an den Gehäusen 3, 12 befestigt sein, dass die Kontaktierung der beiden Dichtelemente 20, 33 in halber Querschnittsbreite stattfindet.

Die beiden Dichtelemente 20, 33 sind etwa spiegelbildlich zueinander angeordnet, so dass sie mit ihren gekrümmten Bereiche unter axialer Vorspannung dichtend aneinander liegen.

Auch in Fig. 22 ist mit gestrichelten Linien angedeutet, dass das Gehäuse 3 drehfest auf der Welle 7 sitzen kann. In diesem Falle sind die beiden Dichteinheiten 1, 2 um 90° verdreht angeordnet.

Die beiden halbschlauchförmigen Dichtelemente 20, 33 sind vorteilhaft gleich ausgebildet, was zu einer kostengünstigen Herstellung und auch Montage führt. Die beiden Dichtelemente 20, 33 können aus dem gleichen, aber auch aus unterschiedlichem Material bestehen. Hinsichtlich der möglichen Materialien kann auf die Ausführungen zu den vorigen Ausführungsbeispielen verwiesen werden.

Bei sämtlichen Ausführungsbeispielen treten im gesamten Drehzahlbereich der abzudichtenden Welle 7 nur sehr geringe Reibungsverluste auf. Hierbei ist es von Vorteil, wenn die zur Bildung der dynamischen Dichtung aneinander liegenden Dichtteile aus gleichem oder ähnlichem Werkstoff mit sehr geringem Reibungskoeffizienten bestehen oder eine entsprechende reibungsreduzierende Beschichtung aufweisen. Bei entsprechender Gestaltung der Dichtteile kann das abzudichtende Medium, das sich zwischen den Dichtteilen befindet, durch die drehende Welle 7 in den Medienraum zurückgefördert werden. Dazu können die bekannten Rückförderstrukturen in eine oder auch beide Dichtteile eingebracht werden.

Wenn in beiden Dichtteilen Rückförderstrukturen vorgesehen werden, dann werden sie vorteilhaft gegenläufig zueinander ausgebildet. Dadurch wird eine Luftströmung in einer Richtung verhindert.

Wenn Dichtteile aus PTFE gegen werkstoffgleiche, sehr reibungsarme Gegenlaufflächen oder andere reibungsarme Flächen laufen, kann auf verschleißreduzierende Füllstoffe, wie etwa Glasfasern, verzichtet werden.

Wie durch das Ausführungsbeispiel gemäß Fig. 21 angedeutet, können die unterschiedlich gestalteten Dichtelemente auch in Kombination miteinander eingesetzt werden. So kann beispielsweise das halbschlauchförmige Dichtelement 20 mit einer Dichtscheibe kombiniert werden, die in Form einer elastisch verformten Dichtlippe gegen das Dichtelement 20 abdichtet. Solche elastisch verformten Dichtlippen sind beispielhaft an Hand der Fig. 1 bis 6 erläutert worden.

Wie die verschiedenen Ausführungsbeispiele zeigen, können die Dichtteile grundsätzlich sowohl innen als auch außen am Gehäuse 3, 12 befestigt sein. Die Gehäuse können unterschiedlichste Gestaltungen haben. Der Anbindungsbereich für die Dichtelemente kann senkrecht zur Achse der Wellendichtung verlaufen, aber auch unter weitgehend beliebigen Winkeln zur Wellendichtungsachse ausgerichtet sein.

Bei den beschriebenen Ausführungsformen ist es möglich, in zumindest einem der beiden aneinander liegenden Dichtteile eine förderwirksame Struktur vorzusehen. Mit ihr kann im dynamischen Fall ein Gaspolster aufgebaut werden, das die aneinander gleitenden Dichtteile auch voneinander trennt.

Der mit der Welle 7 mitdrehende Dichtteil 21 kann eine höhere Masse aufweisen, um durch Ausnutzen der Zentrifugalkraft bei höheren Drehzahlen ein Abheben der Dichtteile voneinander zu gewährleisten. Solche höheren Massen können beispielsweise durch Masseanhäufungen oder Füllstoffe mit hoher Dichte erzeugt werden. Wenn die Dichtteile 11, 21 bei höheren Drehzahlen der Welle 7 voneinander abheben, wird die Reibung und damit der Verschleiß der Dichtteile weiter verringert. So ist es beispielsweise möglich, dass die Dichtteile von Dichtungen von Verbrennungsmotoren beispielsweise ab etwa halber Leerlaufdrehzahl der Welle 7 voneinander abheben, so dass eine dynamische Abdichtung nur bei entsprechend geringen Drehzahlen und auf jeden Fall bei Stillstand der Welle 7 erreicht wird. Das Abheben der Dichtteile kann beispielsweise durch einen Anschlag begrenzt werden.

## Patentansprüche

1. Wellendichtung mit einer ersten drehfesten Dichteinheit (1, 2), die wenigstens einen Träger (3, 12) aufweist, an dem wenigstens ein Dichtelement (9, 20; 24, 25; 32, 33) befestigt ist, das mit einem Dichtteil versehen ist, und mit einer zweiten, drehfest auf einer Welle (7) zu befestigenden Dichteinheit (2, 1), die mit wenigstens einem Dichtelement (20; 24, 25; 32) versehen ist, das an einem Träger (12) befestigt ist und einen Dichtteil (21, 25, 32) aufweist, wobei einer der Dichtteile (11, 23, 26; 21, 25) der beiden Dichteinheiten (1, 2) unter elastischer Vorspannung am Dichtteil der jeweils anderen Dichteinheit dichtend anliegt,
**dadurch gekennzeichnet, dass** die beiden Dichtteile (11, 21; 23, 25; 21, 30) der beiden Dichteinheiten als Dichtlippen ausgebildet sind, deren freie Enden ter gegeneinander gerichteter elastischer Vorspannung flächig aneinander liegen.

2. Wellendichtung nach Anspruch 1,
**dadurch gekennzeichnet, dass** das Dichtelement (9, 20) zumindest der einen Dichteinheit (1, 2) eine Dichtscheibe ist, die mit einem Befestigungsteil (8, 19) am Träger (3, 12) befestigt ist.

3. Wellendichtung nach Anspruch 1 oder 2,
**dadurch gekennzeichnet, dass** das Dichtelement (9, 20; 22, 23; 28, 30) aus PTFE oder aus glasfaserfreien PTFE-Compounds oder aus einem Elastomerwerkstoff besteht.

4. Wellendichtung nach einem der Ansprüche 1 bis 3,
**dadurch gekennzeichnet, dass** die Dichtlippen (11, 21; 23, 25; 21, 30) im Bereich zwischen den Trägern (3, 12) der beiden Dichteinheiten (1, 2) dichtend aneinander liegen.

5. Wellendichtung nach einem der Ansprüche 1 bis 4,
**dadurch gekennzeichnet, dass** die Träger (3, 12) der Dichteinheiten (1, 2) L-förmigen Querschnitt haben und einen zylindrischen Mantel (4, 13) aufweisen, und dass an wenigstens ein axiales Ende des Mantels (4, 13) ein Flansch (5, 14) anschließt.

6. Wellendichtung nach Anspruch 5,
**dadurch gekennzeichnet, dass** der Flansch (5, 14) rechtwinklig oder spitzwinklig an den zylindrischen Mantel (4, 13) der Träger (3, 12) anschließt.

7. Wellendichtung nach einem der Ansprüche 5 bis 6,
**dadurch gekennzeichnet, dass** das Dichtelement (9, 20; 22, 23; 24, 25; 28, 30) mit einem Befestigungsteil (8, 19) am Flansch (5, 14) oder am zylindrischen Mantel (4, 13) des Trägers (3, 12) befestigt ist.

8. Wellendichtung nach einem der Ansprüche 5 bis 7,
**dadurch gekennzeichnet, dass** das Dichtelement (32) der einen Dichteinheit (1, 2) eine Hülse ist, die an der Innenseite oder Außenseite des zylindrischen Mantels (4, 13) des Trägers (3, 12) angeordnet ist.

9. Wellendichtung nach einem der Ansprüche 5 bis 7,
**dadurch gekennzeichnet, dass** das Dichtelement (33) der einen Dichteinheit (1, 2) eine Dichtscheibe ist, die an der Innenseite des Flansches (5, 14) des Trägers (3, 12) angeordnet ist.

10. Wellendichtung nach einem der Ansprüche 1 bis 9,
**dadurch gekennzeichnet, dass** der Dichtteil (23, 25, 26) der Dichteinheiten (1, 2) Teil eines Überzuges (22, 24, 28) zumindest eines Teils des Trägers (3, 12) ist.

11. Wellendichtung nach einem der Ansprüche 1 bis 10,
**dadurch gekennzeichnet, dass** die Dichtteile (11, 21; 23, 25; 26) der beiden Dichteinheiten (1, 2) vom Träger (3, 12) aus entgegengesetzt zueinander verlaufen.

12. Wellendichtung nach einem der Ansprüche 1 bis 10,
**dadurch gekennzeichnet, dass** die Dichtteile (11, 21) der beiden Dichteinheiten (1, 2) vom Träger (3, 12) aus in gleicher Richtung verlaufen.

13. Wellendichtung nach einem der Ansprüche 1 bis 12,
**dadurch gekennzeichnet, dass** der Dichtteil (21) der drehfest auf der Welle (7) sitzenden Dichteinheit (2) den Dichtteil (11) der drehfesten Dichteinheit (1) an der radial äußeren Seite übergreift und vorteilhaft durch Fliehkraft vom Dichtteil (11) der drehfesten Dichteinheit (1) abhebt.

14. Wellendichtung nach einem der Ansprüche 1 bis 13,
**dadurch gekennzeichnet, dass** das Dichtelement (20, 33) zumindest der einen Dichteinheit (1, 2) im Axialschnitt bogenförmig ausgebildet ist.

15. Wellendichtung nach einem der Ansprüche 1 bis 14,
**dadurch gekennzeichnet, dass** in mindestens dem einen Dichtteil (11, 21) zur Rückförderung von Leckagemedium förderwirksame Strukturen vorgesehen sind.

16. Wellendichtring nach Anspruch 15,
**dadurch gekennzeichnet, dass** in beiden Dichtteilen (11, 21) förderwirksame Strukturen vorgesehen sind, die gegenläufig zueinander angeordnet sind und gegenläufig wirken.

## Claims

1. Shaft seal with a first rotationally fixed sealing unit (1, 2), which comprises at least one support (3, 12), to which at least one sealing element (9, 20; 24, 25; 32, 33) is fastened, which is provided with a sealing part, and with a second sealing unit (2, 1) which is fastened rotationally fixed on a shaft (7), which sealing unit (1, 2) is provided with at least one sealing element (20; 24, 25; 32), which is fastened to a support (12) and comprises a sealing part (21, 25, 32), wherein one of the sealing parts (11, 23, 26; 21, 25) of the two sealing units (1, 2) lies with elastic pretensioning against the sealing part of the respective other sealing unit in a sealing manner,
**characterised in that** the two sealing parts (11, 21; 23, 25; 21, 30) of the two sealing units are designed as sealing lips, the free ends of which lie flat on one another with elastic pretensioning directed against one another.

2. Shaft seal according to claim 1,
**characterised in that** the sealing element (9, 20) at least of the one sealing unit (1, 2) is a sealing disc, which is fastened with a fastening part (8, 19) to the support (3, 12).

3. Shaft seal according to claim 1 or 2,
**characterised in that** the sealing element (9, 20; 22, 23; 28, 30) is made of PTFE or of glass fibre-free PTFE compounds or of elastomer material.

4. Shaft seal according to any one of claims 1 to 3,
**characterised in that** the sealing lips (11, 21; 23, 25; 21, 30) lie against one another in a sealing manner in the region between the supports (3, 12) of the two sealing units (1, 2).

5. Shaft seal according to any one of claims 1 to 4,
**characterised in that** the supports (3, 12) of the sealing units (1, 2) have an L-shaped cross-section and comprise a cylindrical shell (4, 13), and **in that** at least one axial end of the shell (4, 13) is adjoined by a flange (5, 14).

6. Shaft seal according claim 5,
**characterised in that** the flange (5, 14) adjoins the cylindrical shell (4, 13) of the supports (3, 12) at right angles or at an acute angle.

7. Shaft seal according any one of claims 5 to 6,
**characterised in that** the sealing element (9, 20; 22, 23; 24, 25; 28, 30) is fastened with a fastening part (8, 19) to the flange (5, 14) or to the cylindrical shell (4, 13) of the support (3, 12).

8. Shaft seal according any one of claims 5 to 7,
**characterised in that** the sealing element (32) of the one sealing unit (1, 2) is a sleeve, which is arranged at the inner side or outer side of the cylindrical shell (4, 13) of the support (3, 12).

9. Shaft seal according any one of claims 5 to 7,
**characterised in that** the sealing element (33) of the one sealing unit (1, 2) is a sealing disc, which is arranged at the inner side of the flange (5, 14) of the support (3, 12).

10. Shaft seal according any one of claims 1 to 9,
**characterised in that** the sealing part (23, 25, 26) of the sealing units (1, 2) is part of a coating (22, 24, 28) of at least one part of the support (3, 12).

11. Shaft seal according any one of claims 1 to 10,
**characterised in that** the sealing parts (11, 21; 23, 25; 26) of the two sealing units (1, 2) extend from the support (3, 12) in opposite directions to one another.

12. Shaft seal according any one of claims 1 to 10,
**characterised in that** the sealing parts (11, 21) of the two sealing units (1, 2) extend from the support (3, 12) in the same direction.

13. Shaft seal according any one of claims 1 to 12,
**characterised in that** the sealing part (21) of the sealing unit (2) which is sitting rotationally fixed on the shaft (7) overlaps the sealing part (11) of the rotationally fixed sealing unit (1) at the radially outer side and advantageously rises from the sealing part (11) of the rotationally fixed sealing unit (1) as a result of centrifugal force.

14. Shaft seal according any one of claims 1 to 13,
**characterised in that** the sealing element (20, 33) at least of the one sealing unit (1, 2) is formed arc-shaped in the axial section.

15. Shaft seal according any one of claims 1 to 14,
**characterised in that** effective conveying structures are provided in at least the one sealing part (11, 21) for the recirculation of leakage medium.

16. Shaft seal according claim 15,
**characterised in that** effective conveying structures are provided in both sealing parts (11, 21) and are arranged working in opposite direction and function in opposite direction.

## Revendications

1. Joint d'arbre, pourvu d'une première unité d'étanchéité (1, 2) non tournante, qui comporte au moins un support (3, 12) sur lequel est fixé au moins un élément d'étanchéité (9, 20; 24, 25; 32, 33), qui est munie d'une pièce d'étanchéité, et pourvu d'une deuxième unité d'étanchéité (2, 1) qui doit être fixée de manière non tournante sur un arbre (7), qui est munie d'au moins un élément d'étanchéité (20 ; 24, 25 ; 32), qui est fixé sur un support (12) et qui comporte une pièce d'étanchéité (21, 25, 32), l'une des pièces d'étanchéité (11, 23, 26 ; 21, 25) des deux unités d'étanchéité (1, 2) étant adjacente sous précontrainte élastique à la pièce d'étanchéité de l'autre unité d'étanchéité respective
**caractérisé en ce que** les deux pièces d'étanchéité (11, 21 ; 23, 25 ; 21, 30) des deux unités d'étanchéité sont conçues sous la forme de lèvres d'étanchéité dont les extrémités libres sont adjacentes par la surface sous précontrainte élastique dirigée l'une contre l'autre.

2. Joint d'arbre selon la revendication 1,
**caractérisé en ce que** l'élément d'étanchéité (9, 20) d'au moins l'une unité d'étanchéité (1, 2) est une rondelle d'étanchéité qui est fixée par une pièce de fixation (8, 19) sur le support (3, 12).

3. Joint d'arbre selon la revendication 1 ou 2,
**caractérisé en ce que** l'élément d'étanchéité (9, 20 ; 22, 23 ; 28, 30) est constitué de PTFE ou d'un composite de PTFE exempt de fibres de verre ou en un matériau élastomère.

4. Joint d'arbre selon l'une quelconque des revendications 1 à 3,
**caractérisé en ce que** dans la zone entre les supports (3, 12) des deux unités d'étanchéité (1, 2), les lèvres d'étanchéité (11, 21 ; 23, 25 ; 21, 30) sont adjacentes de manière à assurer l'étanchéité.

5. Joint d'arbre selon l'une quelconque des revendications 1 à 4,
**caractérisé en ce que** les supports (3, 12) des unités d'étanchéité (1, 2) ont une section transversale en forme de L et comportent une enveloppe (4, 13) cylindrique et **en ce que** sur au moins une extrémité axiale de l'enveloppe (4, 13) se raccorde une bride (5, 14).

6. Joint d'arbre selon la revendication 5,
**caractérisé en ce que** la bride (5, 14) se raccorde sous un angle droit ou sous un angle aigu sur l'enveloppe (4, 13) cylindrique des supports (3, 12).

7. Joint d'arbre selon l'une quelconque des revendications 5 à 6,
**caractérisé en ce que** l'élément d'étanchéité (9, 20 ; 22, 23 ; 24, 25 ; 28, 30) est fixé par une pièce de fixation (8, 19) sur la bride (5, 14) ou sur l'enveloppe (4, 13) cylindrique du support (3, 12).

8. Joint d'arbre selon l'une quelconque des revendications 5 à 7,
**caractérisé en ce que** l'élément d'étanchéité (32) de l'une unité d'étanchéité (1, 2) est une douille, qui est placée sur la face intérieure ou sur la face extérieure de l'enveloppe (4, 13) cylindrique du support (3, 12).

9. Joint d'arbre selon l'une quelconque des revendications 5 à 7,
**caractérisé en ce que** l'élément d'étanchéité (33) de l'une unité d'étanchéité (1, 2) est une rondelle d'étanchéité qui est placée sur la face intérieure de la bride (5, 14) du support (3, 12).

10. Joint d'arbre selon l'une quelconque des revendications 1 à 9,
**caractérisé en ce que** la pièce d'étanchéité (23, 25, 26) des unités d'étanchéité (1, 2) est une partie d'un enrobage (22, 24, 28) d'au moins une partie du support (3, 12).

11. Joint d'arbre selon l'une quelconque des revendications 1 à 10,
**caractérisé en ce que** les pièces d'étanchéité (11, 21 ; 23, 25 ; 26) des deux unités d'étanchéité (1, 2) s'écoulent à l'opposée l'une de l'autre à partir du support (3, 12).

12. Joint d'arbre selon l'une quelconque des revendications 1 à 10,
**caractérisé en ce que** les pièces d'étanchéité (11, 21) des deux unités d'étanchéité (1, 2) s'écoulent dans la même direction à partir du support (3, 12).

13. Joint d'arbre selon l'une quelconque des revendications 1 à 12,
**caractérisé en ce que** la pièce d'étanchéité (21) de l'unité d'étanchéité (2) assise de manière solidaire en rotation sur l'arbre (7) chevauche la pièce d'étanchéité (11) de l'unité d'étanchéité (1) solidaire en rotation sur la face extérieure en direction radiale et se soulève avantageusement par force centrifuge de la pièce d'étanchéité (11) de l'unité d'étanchéité (1) solidaire en rotation.

14. Joint d'arbre selon l'une quelconque des revendications 1 à 13,
**caractérisé en ce que** l'élément d'étanchéité (20, 33) d'au moins l'une unité d'étanchéité (1, 2) est conçue en forme d'arc en coupe axiale.

15. Joint d'arbre selon l'une quelconque des revendications 1 à 14,
**caractérisé en ce que** dans au moins l'une pièce d'étanchéité (11, 21), des structures à action de transport sont prévues pour le renvoi de fluide de fuite.

16. Joint d'arbre selon la revendication 15,
**caractérisé en ce que** dans les deux unités d'étanchéité (11, 21) sont prévues des structures à action de transport, qui sont placées à contresens et qui agissent à contresens.
